(19) **Europäisches Patentamt / European Patent Office / Office européen des brevets**

(11) **EP 1 603 176 B1**

(12) **EUROPEAN PATENT SPECIFICATION**

(45) Date of publication and mention of the grant of the patent:
**17.03.2010 Bulletin 2010/11**

(51) Int Cl.:
***H01M 2/16*** (2006.01)     ***D04H 1/54*** (2006.01)
*H01M 10/24* (2006.01)

(21) Application number: **04704748.5**

(22) Date of filing: **23.01.2004**

(86) International application number:
**PCT/JP2004/000625**

(87) International publication number:
**WO 2004/073094 (26.08.2004 Gazette 2004/35)**

(54) **PRODUCTION METHOD OF A SEPARATOR FOR AN ALKALI SECONDARY BATTERY**

VERFAHREN ZUR HERSTELLUNG EINES SEPARATORS FÜR EINE ALKALI-SEKUNDÄRBATTERIE

PROCEDE DE FABRICATION POUR D'UN SEPARATEUR POUR UNE BATTERIE ALCALINE RECHARGEABLE

(84) Designated Contracting States:
**DE FR GB**

(30) Priority:  **23.01.2003   JP 2003015361**

(43) Date of publication of application:
**07.12.2005   Bulletin 2005/49**

(73) Proprietor: **Daiwabo Holdings Co., Ltd.
Chuo-ku,
Osaka-shi (JP)**

(72) Inventors:
• **YAMAMOTO, Hiroyuki
Hyogo 675-0021 (JP)**
• **KIDA, Tatsunori
Hyogo 651-1333 (JP)**

• **KAMISASA, Toshio
Akashi-shi Hyogo 674-0067 (JP)**

(74) Representative: **Behnisch, Werner
Reinhard, Skuhra, Weise & Partner GbR
Patent- und Rechtsanwälte
Friedrichstrasse 31
80801 München (DE)**

(56) References cited:
EP-A- 0 989 619     EP-A- 1 047 140
EP-A- 1 150 372     JP-A- 11 067 182
JP-A- 11 297 294     JP-A- 11 297 295
JP-A- 2000 164 191   JP-A- 2001 143 682
JP-A- 2001 307 710   JP-A- 2002 025 528
JP-A- 2003 031 200   JP-A- 2003 059 482
JP-A- 2003 142 061

## Description

Technical Field

The present invention relates to a separator material that is a sulfonated nonwoven comprising polyolefin short fibers and is for use in an alkali secondary battery, a lithium ion secondary battery, an electrochemical device (e.g., an electrical bilayer capacitor, a capacitor, etc.), an ion exchange separator (e.g., an ion catcher, etc.), or the like. Particularly, the present invention relates to a separator material and an alkali secondary battery separator that have high self-discharging performance for use in alkali secondary battery applications, such as a nickel-cadmium battery, a nickel-zinc battery, a nickel-hydrogen battery and the like.

Background Art

In recent years, nonwovens that are made of polyolefin fibers, such as polypropylene or the like, and are treated by a hydrophilic treatment preferably is used as a separator material for use in an alkali secondary battery or the like. Particularly, a separator material that is subjected to a sulfonation treatment as a hydrophilic treatment has a high level of self-discharging performance when charge and discharge are repeatedly performed, and therefore, preferably is employed. However, the strength of the polyolefin fibers of the sulfonated separator material is likely to be deteriorated, leading to a reduction in a tensile strength of the nonwoven itself. Therefore, when a separator material is made thinner as the capacity of a battery is increased, a problem arises in process performance when assembling a battery, such as the tendency of a short circuit to occur or the like.

To suppress the reduction of the tensile strength of the nonwoven, various attempts have been made. For example, Patent Publication 1 described below proposes a secondary battery separator in which polypropylene fibers are subjected to a water jet process to fibrillate a surface of the fiber to produce polypropylene fibers having a specific surface area of 1.5 m$^2$/g or more, followed by a wetlaying process and a non-contact sulfonation treatment. Patent Publication 2 described below proposes an alkali battery separator in which a discharging process is performed under atmospheric pressure in the presence of 10 vol% or more sulfur-containing compound gas, and the ratio of S/C as measured by X-ray photoelectron spectroscopy and S/C as measured by a flask combustion technique is 15 or more. Patent Publication 3 described below proposes an alkali battery separator in which easily-sulfonated fibers (e.g., polystyrene, etc.) and polyolefin fibers are mixed, followed by a treatment under a mild sulfonation condition, and the ratio of S/C as measured by X-ray photoelectron spectroscopy and S/C as measured by a flask combustion technique is 10 to 50. Patent Publication 4 described below proposes an alkali battery separator that is made of sulfonated polypropylene, that has a degree of sulfonation (S/C) of $2.0 \times 10^{-3}$ to $5.5 \times 10^{-3}$ and a specific surface area of 0.6 to 0.9 m$^2$/g and that has a satisfactory level of self-discharging performance. Patent Publication 5 described below proposes a battery separator that is obtained by using a splittable fiber that is composed of a plurality of components for a nonwoven and subjecting the nonwoven to a high-pressure water jet process for sulfonation.

Patent Publication 1: JP H11-144698A
Patent Publication 2: JP H11-317213A
Patent Publication 3: JP H11-297294A
Patent Publication 4: JP 2001-313066A
Patent Publication 5: JP 2000-215876A

However, the above-described separator materials have the following problems. For example, in Patent Publication 1, an attempt is made to achieve a high level of sulfonation under a mild sulfonation treatment condition by increasing the specific surface area of a polypropylene fiber, thereby suppressing a reduction in strength of the fiber. However, the fiber needs to be subjected to the water jet process before the wetlaying process. Besides, fibrillation requires a long time of processing, resulting in poor productivity and high cost. Moreover, since the specific surface area of the single fiber is simply increased and the wetlaying process is only performed, charge and discharge repetitions may lead to self-discharge. In Patent Publication 2, an attempt is made to maintain the tensile strength of a nonwoven by adopting a discharging process under atmospheric pressure in the presence of 10 vol% or more sulfur-containing compound gas to unevenly distribute a sulfur-containing atomic group in a near-surface portion of the nonwoven without introducing the sulfur-containing atomic group into a deep inner portion of the nonwoven. In Patent Publication 3, an easily-sulfonated fiber, such as polystyrene or the like, is treated under a mild sulfonation condition so as to obtain an amount of sulfonic acid group effective to the easily-sulfonated fiber and to reduce the degree of sulfonation of the polyolefin fiber, and thus a reduction of the strength of the fiber can be suppressed. However, all of the above-described battery separators have difficulty in maintaining a sufficient level of output performance from the beginning and may have a reduction in self-discharging performance over time. In Patent Publication 4, by defining the degree of sulfonation (S/C) and the specific surface area of the separator, self discharge performance after 200 cycles of charge and discharge is improved. However, when charge and discharge are repeated further, self-discharge may not be suppressed. In Patent Publication 5, after the high-pressure water jet process, thermal bonding composite fibers are melted to bond the component fibers together securely. Therefore, the tensile strength of the nonwoven is improved. However, the sulfonation treatment may not be performed uniformly in an inner portion of the nonwoven.

EP 0 989 619 A1 disclosed an alkaline battery separator comprising a gas-permeable sheet comprising a hydrophilic portion.

Disclosure of Invention

The present invention is provided to solve the above-described problems. The present invention provides: a method of producing an alkali secondary battery separator material that has a high level of self-discharging performance when charge and discharge are performed repeatedly, a high level of process performance when assembling a battery, and a high level of short-circuit withstand capability; wherein said method is defined by the terminal features of claim 1.

A separator material produced by the method of the present invention is a sulfonated nonwoven that comprises a polyolefin ultra-fine short fiber having a fineness of less than 0.5 dtex and other polyolefin short fiber(s). The other polyolefin short fibers include a polyolefin thermal bonding short fiber. At least a portion of the polyolefin thermal bonding short fiber is flattened to bond the component fibers together. The nonwoven has a specific surface area in a range of 0.6 m$^2$/g to 1.5 m$^2$/g and satisfies the following ranges:

(1) a ratio $(S/C)_E$ of the number of sulfur atoms (S) to the number of carbon atoms (C) in the nonwoven, as measured by Electron Spectroscopy for Chemical Analysis (ESCA), is in a range of $5\times10^{-3}$ to $60\times10^{-3}$;
(2) a ratio $(S/C)_B$ of the number of sulfur atoms (S) to the number of carbon atoms (C) in the nonwoven, as measured by a flask combustion technique, is in a range of $2.5\times10^{-3}$ to $7\times10^{-3}$; and
(3) a ratio $(S/C)_E/(S/C)_B$ (depth of sulfonation) of $(S/C)_E$ to $(S/C)_B$ is in a range of 1.5 to 12.

Next, a method of producing a separator material according to the present invention, comprises: subjecting a fiber composed of a polyolefin ultra-fine short fiber having a fineness of less than 0.5 dtex and other polyolefin short fiber(s) to a wetlaying process, the other polyolefin short fiber including a polyolefin thermal bonding short fiber; subjecting the fiber to a heat treatment at a temperature at which the polyolefin thermal bonding short fiber melts and flattening at least a portion of the polyolefin thermal bonding short fiber, to thermally bond the component fibers together; thereafter, subjecting the component fibers to a hydroentangling process to entangle together; thereafter, imparting a functional group including a sulfur atom to the fibers by a sulfonation treatment; and thereafter, subjecting the fibers to a heat press process, thereby obtaining a nonwoven specific surface area in a range of 0.6 m$^2$/g to 1.5 m$^2$/g.

Next, an alkali secondary battery separator produced by the method according to the present invention comprises a separator material that is a sulfonated nonwoven that comprises a polyolefin ultra-fine short fiber having a fineness of less than 0.5 dtex and other polyolefin short fiber(s). The other polyolefin short fibers include a polyolefin thermal bonding short fiber. At least a portion of the polyolefin thermal bonding short fibers is flattened to bond the component fibers together. The nonwoven has a specific surface area in a range of 0.6 m$^2$/g to 1.5 m$^2$/g and satisfies the following ranges:

(1) a ratio $(S/C)_E$ of the number of sulfur atoms (S) to the number of carbon atoms (C) in the nonwoven, as measured by Electron Spectroscopy for Chemical Analysis (ESCA), is in a range of $5\times10^{-3}$ to $60\times10^{-3}$;
(2) a ratio $(S/C)_B$ of the number of sulfur atoms (S) to the number of carbon atoms (C) in the nonwoven, as measured by a flask combustion technique, is in a range of $2.5\times10^{-3}$ to $7\times10^{-3}$; and
(3) a ratio $(S/C)_E/(S/C)_B$ (depth of sulfonation) of $(S/C)_E$ to $(S/C)_B$ is in a range of 1.5 to 12.

Brief Description of Drawings

FIGS. 1A to 1F show examples of a fiber cross-section of a splittable composite short fiber for use in the present invention.
FIG. 2 shows a 400x electron micrograph of a separator material according to an example of the present invention.

1: first component, 2: second component

Description of the Invention

The present inventors have conducted in-depth research on a separator material that overcomes the above-described conventional problems and found that self-discharging performance is attributed to uneven distribution of sulfur atoms. Specifically, in conventional separators, distribution of sulfur atoms is biased toward a near-surface portion in a thickness direction of a nonwoven to maintain the tensile strength of the nonwoven. As a result, uneven distribution of electrolytic solution is likely to occur in the thickness direction of the nonwoven. Therefore, when charge and discharge are performed repeatedly, lack of solution or excessive accumulation of solution is likely to occur partially in the separator. Further, it was found that, when the specific surface area of the nonwoven is only regulated by simply reducing the fineness (reducing the thickness of the fiber), it is difficult to suppress the uneven distribution of sulfur atoms and obtain a desired tensile strength of the nonwoven. Therefore, we focused attention on a relationship between a distribution of a sulfonation level (the amount of a functional group including a sulfur atom) in the thickness direction of the separator material and the tensile strength of the nonwoven. We achieved the invention based on a finding such that a thermal bonding nonwoven in which thermal bonding short fiber are flattened to obtain a desired specific surface area of the nonwoven is sulfonated under appropriate conditions, thereby obtaining a separator material that has a specific sulfonation level and a sufficient tensile strength of the nonwoven while preventing uneven distribution of the sulfonation level between the near-surface portion and the inner portion of the separator. Moreover, by causing the nonwoven to include a high-strength short fiber and be flattened in a manner that achieves the desired specific surface area of the nonwoven, the tensile strength of the nonwoven can be improved further.

The separator material, or an alkali secondary battery separator comprising a separator material that is obtained by the above-described production method, has a high level of self-discharging performance when charge and discharge are repeatedly performed, a high level of process performance when assembling a battery, and a high level of short-circuit withstand capability.

As used herein, the self-discharging performance refers to the performance of a battery to suppress its self-discharge. A separator material that has a larger effect of reducing self-discharge has a higher level of self-discharging performance.

The nonwoven used in the present invention comprises a polyolefin ultra-fine short fiber having a fineness of less than 0.5 dtex and other polyolefin short fiber(s). The other polyolefin short fibers include a polyolefin thermal bonding short fiber. At least a portion of the polyolefin thermal bonding short fibers is flattened to bond the component fibers together. Thus, the nonwoven is a thermal bonding nonwoven. The specific surface area of the nonwoven is in a range of $0.6m^2/g$ to $1.5m^2/g$. As a result, when the nonwoven is sulfonated, a deterioration in the tensile strength of the nonwoven is suppressed. In addition, a variation in sulfonation level in the thickness direction (from the surface to the inner portion) of the nonwoven can be suppressed. As a result, it is possible to suppress a phenomenon such that lack of solution or excessive accumulation of solution partially occurs in the separator when charge and discharge are repeatedly performed. Also, it is possible to prevent the self-discharging performance from being reduced over time.

The nonwoven may be a thermal bonding nonwoven comprising a polyolefin ultra-fine short fiber having a fineness of less than 0.5 dtex, and other polyolefin short fibers including a polyolefin thermal bonding short fiber and a polyolefin high-strength short fiber having a fiber strength of 5 cN/dtex or more. At least a portion of the polyolefin thermal bonding short fiber and at least a portion of the polyolefin high-strength short fiber are flattened to bond the component fibers together by the polyolefin thermal bonding short fiber. The specific surface area of the nonwoven can be regulated in a range of $0.6 \ m^2/g$ to $1.5 \ m^2/g$.

The polyolefin ultra-fine short fiber having a fineness of less than 0.5 dtex used in the present invention may have a fiber cross-section that is in the cross-sectional shape of, for example, a circle, an irregular shape, a hollow shape or the like. For example, the polyolefin resin is one that comprises a polyolefin resin selected from at least one of homo- and copolymers, such as polyethylene, polypropylene, polybutene-1, polymethylpentene and the like. Among them, at least one selected from polypropylene, propylene copolymer, polymethylpentene and methylpentene copolymer preferably is used, taking into consideration the surface modification capability of a fiber (ease of introduction of a functional group including a sulfur atom) in the sulfonation treatment.

The polyolefin ultra-fine short fiber has a fineness of less than 0.5 dtex. A lower limit of a preferable fineness of the polyolefin ultra-fine short fiber is 0.03 dtex. An upper limit of the preferable fineness is 0.3 dtex. When the polyolefin ultra-fine short fiber has a fineness of less than 0.5 dtex, the nonwoven can be made denser and its short-circuit withstand capability can be improved. Further, the specific surface area of the fiber is improved. Therefore, a relatively weak condition of a sulfonation treatment can achieve a sufficient sulfonation level. As a result, when the fiber is incorporated in a battery, a reduction in the self-discharging performance can be suppressed.

Examples of a method of obtaining the polyolefin ultra-fine short fiber include, for example, a method of forming a polyolefin resin singly into a fiber, a method of forming a sheath-core or side-by-side type composite fiber, a method of splitting a splittable composite fiber, a method of melting a portion of an islands-in-the-sea type composite fiber, and the like. Among them, the splittable composite short fiber has a post-splitting fiber cross-section of an irregular shape, such as a wedge, substantially a trapezoid or the like, so that the specific surface area of the fiber is large. In addition, the fiber is split and the split fibers entangle during a hydroentangling process described below, so that the fiber is oriented to the nonwoven thickness direction to an appropriate extent. Therefore, it is preferably easy to introduce a functional group including a sulfur atom into an inner portion of the nonwoven by a sulfonation treatment.

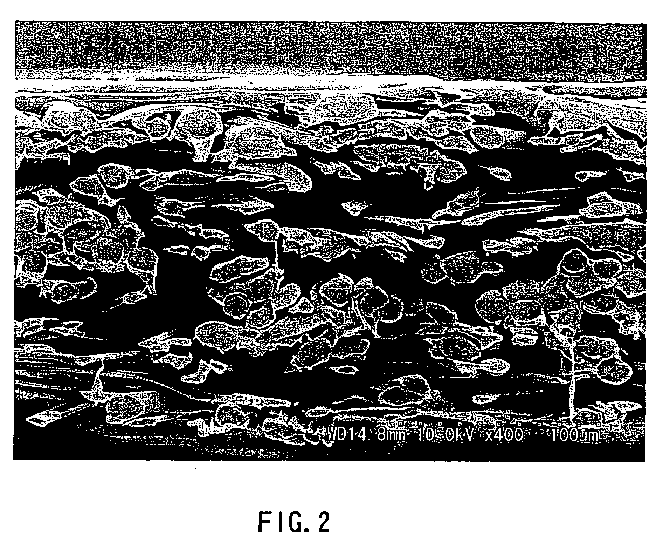

At least a portion of the polyolefin ultra-fine short fiber is flattened during a heat treatment in a wetlaying process, a heat press process in thickness processing, or the like, thereby further improving the specific surface area of the fiber. As a result, the specific surface area of the nonwoven can be preferably improved. Particularly, a proportion of the flattened polyolefin ultra-fine short fiber in a surface layer portion of the nonwoven may be caused to be larger than that of an inner portion of the nonwoven, thereby making it possible to secure a larger cavity in the nonwoven inner portion than in the nonwoven surface layer portion. Therefore, it is inferred that, in a sulfonation treatment, particularly an $SO_3$ gas treatment, a reactive substance is accumulated more easily in the inner portion of the nonwoven, so that a functional group including a sulfur atom can be introduced easily into the inner portion of the nonwoven. The "surface layer portion of a nonwoven" refers to a portion ranging from a surface of the nonwoven to a depth of 20 where the whole thickness is assumed to be 100. The "proportion of flattened fiber" is determined by observing an enlarged cross-section of the separator material to check visually how much the component fibers are flattened by external force or the like, or alternatively, by comparing a flat ratio obtained from a ratio of a maximum whole length of the fiber to a maximum length in a direction perpendicular to the maximum whole length before and after flattening. FIG. 2 shows an electron microscopic photograph (magnification: 400x) of a cross-section of a separator material of the present invention. As can be seen from FIG. 2, the proportion of flattened component fibers including a polyolefin ultra-fine short fiber and other polyolefin short fibers is larger in the surface layer portion of the nonwoven than in the inner portion.

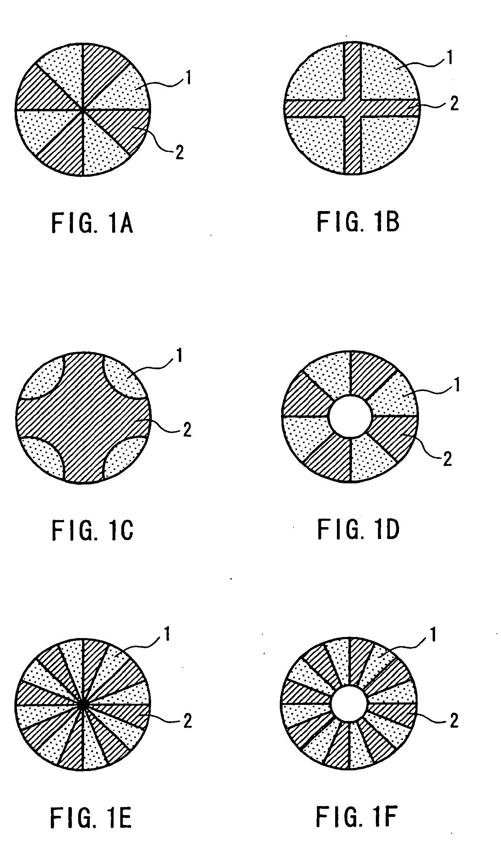

Preferably, the splittable composite short fiber has a specific combination of two component polyolefin resins selected from polymethylpentene, polypropylene, polyethylene, and copolymers thereof. FIGS. 1A to 1F show examples of a fiber cross-section of the splittable composite short fiber. Reference numeral 1 indicates a first component and reference numeral 2 indicates a second component.

The amount of the polyolefin ultra-fine short fiber, when the amount of the nonwoven is assumed to be 100 parts by mass, preferably is in a range of 20 parts by mass to and 80 parts by mass. A more preferable lower limit of the polyolefin ultra-fine short fiber content is 30 parts by mass. An even more preferable lower limit of the polyolefin ultra-fine short fiber content is 35 parts by mass. A more preferable upper limit of the polyolefin ultra-fine short fiber content is 60 parts by mass. An even more preferable upper limit of the polyolefin ultra-fine short fiber content is 55 parts by mass. When the polyolefin ultra-fine short fiber content is less than 20 parts by mass, it is difficult to obtain a dense nonwoven, resulting in poor short-circuit withstand capability. Further, the specific surface area of the nonwoven is small, likely leading to a reduction in self-discharging performance. When the polyolefin ultra-fine short fiber content exceeds 80 parts by mass, the nonwoven becomes excessively dense, resulting in a reduction in gas permeability. Therefore, an internal pressure and an internal resistance are likely to be increased. Furthermore, the specific surface area of the nonwoven becomes excessively large, so that it may be difficult to obtain a desired ratio of $(S/C)_E$ to $(S/C)_B$.

For example, when the splittable composite short fiber is used as the polyolefin ultra-fine short fiber, the specific surface area of the nonwoven varies depending on a proportion of the splittable composite short fiber that is split. Therefore, the above-described polyolefin ultra-fine short fiber content may be regulated based on the content or the split rate of the splittable composite short fiber content. The amount of splittable composite short fiber, when the amount of the nonwoven is assumed to be 100 parts by mass, preferably is in a range of 20 parts by mass to 80 parts by mass. A more preferable lower limit of the splittable composite short fiber content is 30 parts by mass. An even more preferable lower limit of the splittable composite short fiber content is 35 parts by mass. A more preferable upper limit of the splittable composite short fiber content is 60 parts by mass. An even more preferable splittable composite short fiber content is 55 parts by mass.

The split rate of the splittable composite short fiber preferably is 50% or more. A more preferable lower limit of the split rate is 60%. When the split rate of the splittable composite short fiber is less than 50%, it may be difficult to regulate the polyolefin ultra-fine short fiber content. For example, when the split rate of the splittable composite short fiber is 50%, the splittable composite short fiber content may need to be 40 parts by mass to obtain a desired polyolefin ultra-fine short fiber where the amount of the nonwoven is assumed to be 100 parts by mass.

The separator material of the present invention comprises other polyolefin short fibers in addition to the polyolefin ultra-fine short fiber. When the amount of the nonwoven is assumed to be 100 parts by mass, the amount of the other polyolefin short fiber preferably is in a range of 80 parts by mass to 20 parts by mass. A more preferable lower limit of the other polyolefin short fiber content is 40 parts by mass. An even more preferable lower limit of the other polyolefin short fiber content is 45 parts by mass. A more preferable upper limit of the other polyolefin short fiber content is 70 parts by mass. An even more preferable upper limit of the other polyolefin short fiber content is 65 parts by mass. Note that still other short fiber(s) optionally may be included in an amount that does not impair the effect of the present invention, in addition to the polyolefin ultra-fine short fiber and the other polyolefin short fiber.

The other polyolefin short fiber may be preferably a short fiber made of a polyolefin resin that has a fineness of 0.5 dtex or more and 5 dtex or less. A more preferable lower limit of the fineness of the other polyolefin short fiber is 0.8 dtex. A more preferable upper limit of the fineness of the other polyolefin short fiber is 3 dtex. When the nonwoven is composed of short fibers having different finenesses, the fiber strength is larger than that of the polyolefin ultra-fine short fiber, so that not only the tensile strength of the nonwoven is improved, but also it is made easy to regulate the specific surface area of the nonwoven to a desired value. When the other polyolefin short fiber has a fineness of less than 0.5 dtex, the fibers constituting the nonwoven are substantially only ultra-fine short fibers, so that the nonwoven becomes excessively dense, likely leading to a reduction in gas permeability and an increase in internal pressure and internal resistance. Further, the specific surface area of the nonwoven becomes excessively large, so that it is difficult to obtain a desired ratio of $(S/C)_E$ to $(S/C)_B$. On the other hand, when the other polyolefin short fiber has a fineness of more than 5 dtex, the desired specific surface area of the nonwoven is unlikely to be obtained.

For the separator material of the present invention, it is important to comprise a polyolefin thermal bonding short fiber as the other polyolefin short fiber in order to obtain a nonwoven having an appropriate specific surface area and a high tensile strength. At least a portion of the polyolefin thermal bonding short fiber is flattened and melted to improve adhesiveness of the component fibers, resulting in a thermal bonding nonwoven in which the specific surface area of the fiber is increased. Particularly, a proportion of the flattened polyolefin thermal bonding short fiber in a surface layer portion of the nonwoven may be caused to be larger than that of an inner portion of the nonwoven, thereby making it possible to secure a larger cavity in the nonwoven inner portion than in the nonwoven surface layer portion. Therefore, it is inferred that, in a sulfonation treatment, particularly an $SO_3$ gas treatment, a reactive substance is accumulated more easily in the nonwoven inner portion, so that a functional group including a sulfur atom can be easily introduced into the nonwoven inner portion.

A polyolefin resin constituting the polyolefin thermal bonding short fiber is, for example, at least one resin selected from homo- and copolymers, such as polyethylene, polypropylene, polybutene-1 and the like. Particularly, a resin that has a melting point that is lower by 10°C or more than the melting point of the polyolefin ultra-fine short fiber preferably is employed, since it is easy to regulate the specific surface area of a nonwoven comprising such a resin.

For example, the polyolefin thermal bonding short fiber is a single component fiber or composite fiber that has a cross-sectional shape of a circle, an irregular shape, a hollow shape or the like. The polyolefin thermal bonding short fiber preferably is a fiber that comprises a polyolefin resin having a melting point lower by 10°C or more than the melting point of a component constituting the polyolefin ultra-fine short fiber (hereinafter referred to as a "low-melting point polyolefin resin") as a component (thermal bonding component), and in which the low-melting point polyolefin resin occupies 20% of the surface of the fiber. It is assumed that the melting point of the thermal bonding component of the polyolefin thermal bonding short fiber is lower by less than 10°C than the melting point of a component constituting the polyolefin ultra-fine short fiber. In this case, when the polyolefin thermal bonding short fiber is melted, the polyolefin ultra-fine short fiber is also melted. Therefore, a gap between the fibers may be blocked, so that the desired specific surface area of the nonwoven cannot be obtained.

Among the polyolefin thermal bonding short fibers, a low-melting point polyolefin resin may be used as a sheath component, while a polyolefin resin having a melting point that is higher by 10°C or more than that of the low-melting point polyolefin resin (hereinafter referred to as a high melting point polyolefin resin) may be used as a core component, to form a sheath-core composite short fiber. Such a sheath-core composite short fiber achieves a nonwoven having a high tensile strength when bonding fibers constituting a nonwoven. In addition, preferably, the fiber strength is less deteriorated during a sulfonation treatment. A more preferable form of the sheath-core composite fiber is a concentric arrangement of the sheath component and the core component.

Specifically, the sheath-core composite short fiber has a combination, such as high-density polyethylene/polypropylene, propylene copolymer/polypropylene or the like. Particularly, combinations of ethylene-propylene copolymer/polypropylene, ethylene-butene-propylene and copolymer/polypropylene, where the fiber melting point of the sheath component is 140°C or less, preferably have a large strength, if a desired specific surface area is maintained and a resultant nonwoven has a higher tensile strength. Note that a melting point is measured in accordance with JIS-K-7121 (DSC method).

Among the other polyolefin short fibers, the proportion of the polyolefin thermal bonding short fiber preferably is in a range of 50 mass% to 90 mass%. A more preferable lower limit of the polyolefin thermal bonding short fiber content is 60 mass%. A more preferable upper limit of the polyolefin thermal bonding short fiber content is 80 mass%. When the proportion of the polyolefin thermal bonding short fiber among the other polyolefin short fibers is less than 50 mass%, the tensile strength of the nonwoven after the sulfonation treatment is likely to decrease. Further, when thermal bonding between the fibers is insufficient in the hydroentangling process of the thermally bonded thermal bonding nonwoven after the wetlaying process, the fibers are scattered by a water jet or nozzle streaks occur, so that uniform nonwoven texture is not obtained. Further, it is likely that a water jet causes excessive three-dimensional entanglement, so that the fiber is oriented in the nonwoven thickness direction, resulting in a reduction in the tensile strength of the nonwoven. Accordingly, sufficient levels of the self-discharging performance and the short-circuit withstand capability are not likely to be achieved. When the proportion of the polyolefin thermal bonding short fiber exceeds 90 mass%, the melted low-melting point polyolefin resin is likely to block a gap between the fibers, so that the desired specific surface area of the nonwoven cannot be obtained.

The polyolefin thermal bonding short fiber preferably has a fineness in a range of 0.5 dtex to 4 dtex. A more preferable lower limit of the fineness of the polyolefin thermal bonding short fiber is 0.8 dtex. A more preferable upper limit of the fineness of the polyolefin thermal bonding short fiber is 3 dtex. When the polyolefin thermal bonding short fiber has a fineness of less than 0.5 dtex, the nonwoven becomes excessively dense, so that the gas permeability is reduced and the internal pressure and the internal resistance are increased. When the fineness of the polyolefin thermal bonding short fiber exceeds 4 dtex, the desired specific surface area of the nonwoven is not likely to be obtained.

Further, the separator material of the present invention preferably comprises a polyolefin high-strength short fiber having a fiber strength of 5 cN/dtex or more as the other polyolefin short fiber in order to obtain a nonwoven having an appropriate specific surface area and a high tensile strength. At least a portion of the polyolefin high-strength short fiber is flattened to improve the tensile strength of the nonwoven and increase the specific surface area of the fiber, resulting in the desired specific surface area of the nonwoven. Particularly, a proportion of the flattened polyolefin high-strength short fiber in a surface layer portion of the nonwoven may be caused to be larger than that of an inner portion of the nonwoven, thereby making it possible to secure a larger cavity in the nonwoven inner portion than in the nonwoven surface layer portion.

The fiber strength of the polyolefin high-strength short fiber preferably is 5 cN/dtex or more. A more preferable lower limit of the fiber strength of the polyolefin high-strength short fiber is 7 cN/dtex. When the fiber strength of the polyolefin high-strength short fiber is 5 cN/dtex or more, it is possible to secure the desired tensile strength of the nonwoven. The polyolefin high-strength short fiber preferably has a fineness in a range of 1 dtex to 3 dtex. When the fineness of the polyolefin high-strength short fiber is in such a range, the desired specific surface area of the nonwoven can be obtained easily. A more preferable lower limit of the fineness of the polyolefin high-strength short fiber is 1.2 dtex. A more preferable upper limit of the fineness of the polyolefin high-strength short fiber is 2 dtex.

Examples of the polyolefin resin used in the polyolefin high-strength short fiber include, for example, homo- or copolymers of polypropylene, ultra-high molecular weight polyethylene and the like. Among them, polypropylene resin is preferable since the cost is inexpensive and the desired high-strength short fiber is obtained.

As the other polyolefin short fiber, a fiber (hereinafter referred to as a "high-melting point polyolefin short fiber") made of a polyolefin resin that has a melting point higher by 10°C or more than that of a thermal bonding component (low-melting point polyolefin component) of the polyolefin thermal bonding short fiber may be included in addition to the polyolefin thermal bonding short fiber. The polyolefin resin may be a resin that is at least one selected from homo- and copolymers of, for example, polypropylene, polymethylpentene and the like. It is assumed that the melting point of a component of the high-melting point polyolefin short fiber is higher by less than 10°C than the melting point of a thermal bonding component of the polyolefin thermal bonding short fiber. In this case, when the polyolefin thermal bonding short fiber is melted, the high-melting point polyolefin short fiber is also melted. Therefore, a gap between the fibers may be blocked, so that the desired specific surface area of the nonwoven cannot be obtained. For example, the high-melting point polyolefin short fiber is a single component fiber or composite fiber that has a cross-sectional shape of a circle, an irregular shape, a hollow shape or the like. When the polyolefin high-strength short fiber is used as the high-melting point polyolefin short fiber, the effect of the present invention can be achieved effectively.

Preferably, at least a portion of the high-melting point polyolefin short fiber is flattened by a heat treatment before a high-pressure water jet process, a heat press process in thickness processing or the like after a wetlaying process to improve the specific surface area. Particularly, wetlaid webs preferably are produced and combined, followed by a heat and press process using a cylinder dryer machine. When the polyolefin high-strength short fiber is used as the high-melting point polyolefin short fiber, both the desired specific surface area of the nonwoven and the desired tensile strength of the nonwoven preferably are achieved.

The specific surface area of the nonwoven obtained by flattening the component fibers or flattening the polyolefin thermal bonding fiber to bond the component fibers is in a range of 0.6 m²/g to 1.5 m²/g. A preferable lower limit of the specific surface area is 0.7 m²/g. A preferable upper limit of the specific surface area is 1.2 m²/g. When the specific surface area of the nonwoven is less than 0.6 m²/g or exceeds 1.5 m²/g, it is difficult to obtain a desired depth of sulfonation.

The content, the degree of flattening and the like of the polyolefin ultra-fine short fiber, the polyolefin thermal bonding short fiber and/or the polyolefin high-strength short fiber preferably are regulated so that a ratio of the specific surface area of the nonwoven to an apparent specific surface area of the nonwoven calculated from the specific surface area of the fibers constituting the nonwoven as indicated by the following (Expression 1) (hereinafter referred to as a "specific surface area increase rate") is in a range of 115% to 200%,

$$\text{specific surface area increase rate (\%)} = (\text{specific surface area of nonwoven/apparent specific surface area of nonwoven}) \times 100 \cdots \text{(Expression 1)}.$$

As used herein, the apparent specific surface area of a nonwoven calculated from the specific surface areas of fibers is a sum of the specific surface area of each single fiber in the form of a starting fiber material weighted by the proportion of the single fiber in the nonwoven. For example, when the polyolefin ultra-fine short fiber is obtained by splitting a splittable composite short fiber, the specific surface area of the polyolefin ultra-fine short fiber can be calculated from: the fineness of the splittable composite short fiber; a fiber diameter obtained by converting the fineness to a circle cross-section, the density of a resin constituting the fiber; a fiber length; and a split rate. In general, when a fiber is flattened, the surface area of the fiber is increased without a change in the mass, i.e., the specific surface area is increased. Therefore, the specific surface area increase rate is used as an index indicating how much a fiber is flattened from its starting fiber material form, or how much a polyolefin thermal bonding short fiber is melt and how much component fibers are bonded together. When exceeding 100%, the specific surface area increase rate indicates that the specific surface area is increased. When being less than 100%, the specific surface area increase rate indicates that the specific surface area is decreased. When the specific surface area increase rate is less than 115%, the component fiber is not sufficiently flattened, so that a nonwoven having desired ranges of sulfonation level and nonwoven tensile strength cannot be obtained. When the specific surface area increase rate exceeds 200%, the component fiber is excessively flattened, so that when the resultant nonwoven is incorporated in a battery, the internal resistance of the battery is likely to be increased.

The thus-obtained separator material has the following ranges. The $(S/C)_E$ is a ratio of the number of sulfur atoms (S) to the number of carbon atoms (C) in a portion from the surface to a depth of 10 nm of a nonwoven, as measured by Electron Spectroscopy for Chemical Analysis (ESCA). In other words, the $(S/C)_E$ is an index indicating how much a near-surface portion of the nonwoven is sulfonated. The greater the $(S/C)_E$, the higher the sulfonation level (i.e., highly sulfonated). $(S/C)_E$ preferably is in a range of $5 \times 10^{-3}$ to $60 \times 10^{-3}$. A preferable lower limit of $(S/C)_E$ is $10 \times 10^{-3}$. A preferable upper limit of $(S/C)_E$ is $30 \times 10^{-3}$. When $(S/C)_E$ is less than $5 \times 10^{-3}$, the amount of a functional group having a sulfur atom introduced into a near-surface portion of the nonwoven is small, so that the ability to absorb electrolytic solution is insufficient, and therefore, a battery having a satisfactory level of self-discharging performance cannot be obtained. When $(S/C)_E$ exceeds $60 \times 10^{-3}$, the surface of a fiber in the near-surface portion of the nonwoven is significantly deteriorated due to oxidation, so that the tensile strength of the nonwoven is likely to be reduced.

The ratio $(S/C)_E$ of the number of sulfur atoms (S) to the number of carbon atoms (C), as measured by Electron Spectroscopy for Chemical Analysis (ESCA), is measured under the following conditions.

*Electron Spectroscopy for Chemical Analysis (ESCA)*

X-ray photoelectron spectroscopy (ULVAC-PHI ESCA 5500MT manufactured by PERKIN ELMER) was used to measure peak areas of carbon atom (C1s) and sulfur atom (S2p) from a surface of a nonwoven, where Mg·Kα ray was used as an excitation source, an applied voltage was 15 kv, a beam current value was 10 mA, and an escape angle was 45°. Thereafter, photoionization cross-sectional area correction was performed to obtain the ratio $(S/C)_E$ of the number of sulfur atoms (S) to the number of carbon atoms (C).

The $(S/C)_B$ is a ratio of the number of sulfur atoms (S) to the number of carbon atoms (C) in a whole nonwoven, as measured by a flask combustion technique. In other words, $(S/C)_B$ is an index indicating how much the whole nonwoven is sulfonated. The greater the $(S/C)_B$, the higher the sulfonation level (i.e., highly sulfonated). $(S/C)_B$ is in a range of $2.5 \times 10^{-3}$ to $7 \times 10^{-3}$. A preferable lower limit of $(S/C)_B$ is $3 \times 10^{-3}$ or more. A preferable upper limit of $(S/C)_B$ is $5 \times 10^{-3}$ or less. When $(S/C)_B$ is less than $2.5 \times 10^{-3}$, the amount of a functional group having a sulfur atom introduced into a near-surface portion of a nonwoven is small, so that the ability to absorb electrolytic solution is insufficient, and therefore, a battery having a satisfactory level of self-discharging performance cannot be obtained. Further, a sulfonation treatment needs to be performed under very weak conditions. Therefore, it is likely to be difficult to introduce a sulfone group uniformly throughout the nonwoven. Conversely, when $(S/C)_B$ exceeds $7 \times 10^{-3}$, a sulfonation treatment is performed under very strong conditions, so that the tensile strength of the nonwoven is likely to be reduced.

Note that the ratio $(S/C)_B$ of the number of sulfur atoms (S) to the number of carbon atoms (C) is measured by the flask combustion technique under the following conditions.

*Flask combustion technique*

(1) Preparation of an absorbing solution

84 mg of $NaHCO_3$ was dissolved in 100 ml of pure water. 1 ml of 31% $H_2O_2$ solution was added thereto to prepare an absorbing solution.

(2) Preparation of a sample

1 g of a sample was collected from a nonwoven, and was immersed in 13% aqueous potassium hydroxide solution for 30 minutes. Thereafter, the sample was washed with tap water, followed by washing with pure water for 30 minutes. Thereafter, the sample was dried at 60°C for 1 hour. Thus, the sample was prepared.

(3) Oxygen combustion flask method

5 ml of the absorbing solution was placed in a combustion flask, and an inner wall thereof was wet with pure water. Next, the sample (20 mg) was weighed into an ashless filter (5C), which in turn was placed in a platinum basket. The flask was filled with oxygen for 30 seconds. Thereafter, a current was passed through the platinum basket to burn the sample. After burning, the flask was shaken while sometimes adding pure water to a liquid pouring portion of the flask, followed by cooling for 5 minutes. After cooling, the inner wall of the flask was washed with pure water of the liquid pouring portion, and thereafter, was allowed to stand for several minutes. 50 ml of the absorbing solution in the combustion flask was sampled as a solution for measurement using a volumetric flask.

(4) Measurement of $(S/C)_B$

An ion chromatography device (DX-100, manufactured by DIONEX) was used to measure the $SO_4^{2-}$ concentration of the measurement solution. $(S/C)_B$ was calculated based on the $SO_4^{2-}$ concentration and the mass of the sample.

Next, a ratio of $(S/C)_E$ to $(S/C)_B$ (depth of sulfonation) is used to compare the sulfonation level of a near-surface portion of a nonwoven with the sulfonation level of the whole nonwoven. In other words, the ratio is an index indicating how much the nonwoven is sulfonated up to its inner portion. The smaller the depth of sulfonation, the smaller the difference between the sulfonation level of the near-surface portion of the nonwoven and the sulfonation level of the whole nonwoven. In other words, there is a small difference in sulfonation level between the near-surface portion and the inner portion of the nonwoven. When the depth of sulfonation is in a range of 1.5 to 12, the sulfonation level is suppressed from being unevenly distributed between the near-surface portion and the inner portion of the separator. In this case, it is possible to prevent uneven distribution of electrolytic solution in the thickness direction of the nonwoven. As a result, it is possible to suppress a phenomenon such that lack of solution or excessive accumulation of solution partially occurs in the separator when charge and discharge are performed repeatedly. Therefore, it is possible to achieve a high level of self-discharging performance. A preferable lower limit of the depth of sulfonation is 2. A preferable upper limit of the depth of sulfonation is 9. A more preferable upper limit of the depth of sulfonation is 7. An even more preferable upper limit of the depth of sulfonation is 5. A strong condition sulfonation treatment is required to obtain the depth of sulfonation of less than 1.5. In this case, the tensile strength of the nonwoven is likely to be reduced. When the depth of sulfonation exceeds 12, uneven distribution of electrolytic solution is likely to occur and the self-discharging performance is likely to be reduced.

A tensile strength in a longitudinal direction of the nonwoven, as measured in accordance with Japanese Industrial Standards (JIS)-L-1096, preferably is 100 N/5 cm or more. A more preferable tensile strength of the nonwoven is 110 N/5 cm or more. When the tensile strength in the longitudinal direction of the nonwoven is less than 100 N/5 cm, the short-circuit withstand capability is deteriorated as in conventional separator materials that are sulfonated up to its inner portion.

The separator material of the present invention preferably has a thickness of 60 $\mu$m or more and 220 $\mu$m or less. A more preferable lower limit of the thickness is 100 $\mu$m. An even more preferable lower limit of the thickness is 120 $\mu$m. A more preferable upper limit of the thickness is 200 $\mu$m. When the thickness of the separator material is less than 60 $\mu$m, it is likely to be difficult to obtain a desired specific surface area and tensile strength in a longitudinal direction of the nonwoven. When the thickness of the separator material exceeds 220 $\mu$m, the amount of a separator incorporated into a battery and the amount of electrolytic solution are limited, so that battery performance, such as self-discharging performance or the like, is influenced.

The separator material of the present invention preferably has a mass per unit area in a range of 30 $g/m^2$ to 90 $g/m^2$. A more preferable lower limit of the mass per unit area is 50 $g/m^2$. A more preferable upper limit of the mass per unit area is 80 $g/m^2$. When the mass per unit area of the separator material is in a range of 30 $g/m^2$ to 90$g/m^2$, a desired specific surface area and tensile strength in a longitudinal direction of the nonwoven preferably can be obtained.

The separator material of the present invention preferably has a heat-resistant alkali mass reduction rate (described below) of 5 mass% or less. A more preferable upper limit of the heat-resistant alkali mass reduction rate is 3 mass%. The heat-resistant alkali mass reduction rate is used to evaluate a change in mass over time when the separator material is immersed in high-temperature aqueous alkali solution as described below. In other words, the heat-resistant alkali mass reduction rate approximately indicates an internal state of a battery when charge and discharge are performed repeatedly, i.e., is used as an index indicating the self-discharging performance. The smaller the heat-resistant alkali mass reduction rate, the lesser the self-discharge after repetitions of charge and discharge. For example, the heat-resistant alkali mass reduction rate after 500-hour immersion is estimated to correspond to the self-discharging performance after 1500 cycles of charge and discharge. The heat-resistant alkali mass reduction rate after 1000-hour immersion is estimated to correspond to the self-discharging performance after 3000 cycles of charge and discharge.

*Heat-resistant alkali mass reduction rate*

One liter of 35% potassium hydroxide aqueous solution was placed in a 2-liter beaker, followed by heating at 80°C to a constant temperature state. A separator material is cut into squares of 20 cm × 20 cm. The mass of the sample that had reached to a moisture equilibrium state in a constant temperature chamber was measured where the number of significant figures is four. The sample was immersed in potassium hydroxide aqueous solution and a change in masse over time was measured as a mass reduction rate. Note that a mass reduction rate after 1000-hour immersion in potassium hydroxide aqueous solution was obtained in examples described below.

The separator material of the present invention preferably has a puncture strength (described below) of 6 N or more. A more preferable lower limit of the puncture strength is 7 N. The puncture strength is used as an index indicating a short circuit property that occurs due to a foreign matter (dendrite, etc.) reaching a counter electrode or damages caused by the burr of an electrode or the like or repetitions of charge and discharge. The greater the puncture strength, the lesser the frequency of occurrence of a short circuit when the separator material is incorporated into a battery or charge and discharge are repeatedly performed.

*Puncture strength*

Four sheets of nonwoven each having a size of 30 mm (length) × 100 mm (width) were prepared. On the sample thus prepared, an aluminum press plate (length: 46 mm, width: 86 mm, thickness: 7 mm) having an 11 mm-diameter hole at a middle portion thereof was placed. A maximum load (N) was measured when a needle was caused to pierce the middle hole of the press plate vertically with a speed of 2 mm/sec, where the needle is in the shape of a cone 18.7 mm in height with a ball-shaped tip portion of 1 mmΦ and a shaft having a base diameter of 2.2 mm, and a "KES-G5 handy compression tester" manufactured by Kato Tech Co., Ltd. was used. Puncture strengths were measured arbitrarily at 15 different points of each sample and an average value thereof was calculated as the puncture strength.

Next, the separator material of the present invention will be described in detail along with a production method thereof. The fiber web comprising the component fibers is in the form of a short fiber web, such as a dry web obtained by a carding method, an airlaying method or the like, a wetlaid web obtained by a wetlaid method, or the like. Among them, the wetlaid web composed of a component fiber having a fiber length in a range of 3 mm to 25 mm is preferable in terms of a uniform web. A more preferable lower limit of the fiber length is 5 mm. A more preferable upper limit of the fiber length is 15 mm. When the fiber length of the component fiber is less than 3 mm, the fiber is scattered during a hydroentangling process described below, likely leading to an increase in the bubble point pore diameter (maximum pore diameter) of a nonwoven. In this case, it is difficult to obtain a uniform nonwoven. When the fiber length of the component fiber exceeds 25 mm, the dispersion ability of the fiber in slurry is deteriorated. In this case, it is difficult to obtain a uniform nonwoven, likely leading to a larger bubble point pore diameter of a nonwoven.

The wetlaid web can be produced using a commonly used wet papermaking machine. For example, the wetlaid web is produced as follows. Initially, component fibers are mixed to desired ranges and are dispersed in water to a concentration range of 0.01 mass% to 0.6 mass%, to prepare a slurry. In this case, when a splittable composite short fiber is used as a polyolefin ultra-fine short fiber, it is preferable that at least a portion of the splittable composite short fiber is preliminarily split before a wetlaying process to form a polyolefin ultra-fine short fiber. With this process, the polyolefin ultra-fine short fiber is dispersed substantially uniformly in a nonwoven, thereby making it possible to obtain a nonwoven having an appropriate specific surface area. Examples of the preliminary splitting process include a dissociation process and/or a beating process in the step of preparing slurry. Specifically, the preliminary splitting process preferably is performed using a pulper, since dissociation and beating can be performed simultaneously.

Next, a wetlaid web is prepared from the slurry using a wet papermaking machine of a cylinder type, a short wire type, a fourdrinier type or the like. In this case, preferably, when at least one layer of a cylinder type wetlaid web obtained by using a cylinder type wet papermaking machine is used, the tensile strength in a longitudinal direction of the nonwoven is improved. One layer of the wetlaid web, or two or more layers thereof that are combined in the wetlaying process, are transported on a transportation support, such as a blanket or the like. The wetlaid web is dried using a known heat treatment device, such as a cylinder dryer, a thermal roller or the like, or alternatively, is subjected to a heat treatment at a temperature that is higher than a temperature at which the polyolefin thermal bonding short fiber melts to thermally bond the fibers together. As a result, a wetlaid web is obtained. When a hydroentangling process described below is performed, it is preferable that at least a portion of the polyolefin thermal bonding short fiber is flattened to thermally bond the component fibers together. This is because, by flattening the polyolefin thermal bonding short fiber

to thermally bond the component fibers together, it is possible to suppress a reduction in the tensile strength of the nonwoven due to the hydroentangling process. In other words, an excessive heat treatment no longer is required. The polyolefin thermal bonding short fiber may be flattened by applying an appropriate pressure. It is preferable to apply a line pressure in a range of, for example, 20 N/cm to 100 N/cm.

The heat treatment temperature preferably is lower than a temperature at which fiber(s) other than the polyolefin thermal bonding short fiber melt. This is because, when the heat treatment temperature exceeds the temperature at which the fiber(s) other than the polyolefin thermal bonding short fiber melt, a gap is blocked, likely leading to a reduction in the specific surface area. For example, a sheath-core composite short fiber may be used as a polyolefin thermal bonding short fiber, in which the sheath component is a low-melting point polyolefin resin and the core component is a high-melting point polyolefin resin that has a melting point higher by 10°C or more than the melting point of the sheath component. Further, a polyolefin resin may be used as a polyolefin ultra-fine short fiber, which has a melting point higher by 10°C or more than the melting point of the sheath component of the polyolefin thermal bonding short fiber. In this case, the heat treatment temperature preferably is in a range of no less than the melting point of the sheath component and no more than the temperature that is lower by 10°C than the melting point of the core component and the polyolefin ultra-fine short fiber.

Next, the fiber web, particularly the wetlaid web, preferably is subject to a hydroentangling process to entangle the fibers together. When a splittable composite short fiber is used as the polyolefin ultra-fine short fiber, the splittable composite short fiber that has not been split sufficiently is split by the hydroentangling process to form ultra-fine short fibers. Further, fibers mainly in the surface layer portion of the nonwoven are loosened and rearranged. In the hydroentangling process, a nozzle with orifices having a pore diameter of 0.05 mm or more and 0.5 mm or less that are arranged at intervals of 0.3 mm or more and 1.5 mm or less may be used to apply a water jet having a water pressure of 2 MPa or more and 10 MPa or less to both sides of the nonwoven one or more times for each side. A more preferable lower limit of the water pressure is 3 MPa. A more preferable upper limit of the water pressure is 8.5 MPa. When the water pressure is in the above-described range, the fibers are prevented from being excessively oriented in the thickness direction of the nonwoven, and fibers mainly in the surface layer portion of the nonwoven are loosened and rearranged. Therefore, it is inferred that, in a sulfonation treatment, particularly an $SO_3$ gas treatment, a reactive substance penetrates from the surface layer portion of the nonwoven to an appropriate extent, and resides in the nonwoven, so that it becomes easier to introduce a functional group including a sulfur atom into the inner portion of the nonwoven. For example, when the wetlaid web is obtained by thermally bonding by the polyolefin thermal bonding short fiber, it is preferable that the component fibers are rearranged, however, thermally bonded portions are not completely destroyed by the hydroentangling process.

The nonwoven that has been subjected to the hydroentangling process may be dried by a heat treatment at a temperature that is lower than the melting point of the polyolefin thermal bonding short fiber, or alternatively, may be subjected to a heat treatment at a temperature that is higher than or equal to the melting point of the polyolefin thermal bonding short fiber to melt the polyolefin thermal bonding short fiber again to thermally bond the component fibers together. With the above-described manipulation, the specific surface area of the wetlaid nonwoven that has been subjected to the hydroentangling process is regulated to an appropriate range, and the tensile strength in the longitudinal direction of the nonwoven is maintained. Therefore, the tensile strength of a finally obtained separator material can be maintained. The heat treatment after the hydroentangling process is a factor that determines the specific surface area of an intended separator material. When the polyolefin thermal bonding short fiber is melted excessively, the specific surface area is likely to be reduced or the depth of sulfonation is likely to be increased. Therefore, it is more preferable to perform the heat treatment at a temperature that is lower than the melting point of the polyolefin thermal bonding short fiber. More preferably, the heat treatment temperature of the nonwoven after the hydroentangling process is a temperature that is lower by 5°C or more than the melting point of the polyolefin thermal bonding short fiber.

Thereafter, the nonwoven obtained by the above-described method is subjected to a sulfonation treatment to be imparted with a functional group including a sulfur atom. Examples of the sulfonation treatment include a concentrated sulfuric acid treatment, a fuming sulfuric acid treatment, a chlorosulfonic acid treatment, an $SO_3$ gas treatment, and the like. Among them, the $SO_3$ gas treatment is preferable, since it is highly reactive and $SO_3$ gas easily can penetrate the inner portion of the nonwoven. The reaction temperature of the $SO_3$ gas treatment preferably is in a range of 40°C to 90°C. A more preferable lower limit of the reaction temperature is 50°C. A more preferable upper limit of the reaction temperature is 70°C. When the reaction temperature is less than 40°C, the reactivity is insufficient, and therefore, the reaction time needs to be increased, resulting in a reduction in the productivity. When the reaction temperature exceeds 90°C, the reactivity is significantly high, likely leading to a problem, such as a reduction in the tensile strength of the nonwoven, or the like.

In the $SO_3$ gas treatment, the gas concentration preferably is in a range of 1 vol% to 30 vol%. A more preferable lower limit of the gas concentration is 5 vol%. A more preferable upper limit of the gas concentration is 20 vol%. When the gas concentration is less than 1 vol%, the reactivity is insufficient, and therefore, the reaction time needs to be increased, resulting in a reduction in the productivity. When the gas concentration exceeds 30 vol%, the surface temperature of the nonwoven during reaction is not negligible, likely leading to a problem, such as a reduction in the tensile strength of the nonwoven, or the like.

The reaction time in the $SO_3$ gas treatment preferably is in a range of 10 seconds to 600 seconds. A more preferable lower limit of the reaction time is 30 seconds. A more preferable upper limit of the reaction time is 120 seconds. When the reaction time is less than 10 seconds, a sufficient level of reactivity is not obtained, likely leading to an irregular reaction, i.e., uneven distribution of sulfur atoms. When the reaction time exceeds 600 seconds, the reactivity is reduced.

After the sulfonation treatment, the nonwoven is washed with water, alkali aqueous solution or the like. Thus, the nonwoven provided with a functional group including a sulfur atom is obtained. Further, another hydrophilic treatment optionally may be performed before or after sulfonation to an extent that does not impair the effect of the present invention. Examples of the other hydrophilic treatment include a hydrophilic surfactant treatment, a graft copolymerization treatment with vinyl monomer, a fluorine gas treatment, a corona discharge treatment, a plasma treatment, and the like, which are performed singly or in combination.

Next, the nonwoven that has been subjected to the sulfonation treatment is subjected to a heat press process. The specific surface area of the resultant nonwoven may be regulated to be in a range of 0.6 $m^2$/g to 1.5 $m^2$/g. For example, a pair of press machines is of a roller type, a plate type, or the like. Taking the productivity into consideration, a calendaring machine of a plane roller type preferably is employed. As an exemplary means of regulating the specific surface area of the nonwoven, the heat press process preferably is performed using a pair of press machines at a temperature that is higher than 40°C and lower by 30°C or more than a temperature at which a fiber constituting the nonwoven melts. A more preferable lower limit of the processing temperature is a temperature that is higher than 50°C. A more preferable upper limit of the processing temperature is a temperature that is lower by 50°C or more than the temperature at which the component fiber melts. An even more preferable upper limit of the processing temperature is a temperature that is lower by 50°C or more than a temperature at which a polyolefin thermal bonding short fiber melts. When the processing temperature is excessively low, irregular thickness is likely to occur in a width direction of the nonwoven, or the thickness of the post-processing nonwoven is likely to be restored (thickness restoration). When the processing temperature exceeds a temperature that is lower by 30°C than a temperature at which a component fiber of the nonwoven melts, an interfiber gap on the nonwoven surface is blocked, likely leading to a reduction in the specific surface area of the nonwoven. Further, it is likely that the functional group including a sulfur atom imparted by the sulfonation treatment is likely to be deteriorated and attenuated.

A line pressure in the pressing process preferably is in a range of 150 N/cm to 1500 N/cm. A more preferable lower limit of the line pressure is 200 N/cm. An even more preferable lower limit of the line pressure is 300 N/cm. A more preferable lower limit of the line pressure is 1000 N/cm. An even more preferable lower limit of the line pressure is 800 N/cm. When the line pressure is less than 150 N/cm, the thickness processing is unstable and the component fiber is less flattened, so that it is likely to be difficult to obtain a desired specific surface area. When the line pressure exceeds 1500 N/cm, a surface of the nonwoven is likely to form a film, so that the specific surface area of the nonwoven is reduced.

Examples

Hereinafter, the present invention will be described by way of examples. Note that the thickness of a separator material, the tensile strength of a nonwoven, the specific surface area of a nonwoven, and the split rate of a polyolefin splittable composite short fiber were measured as follows.

*Thickness*

Thicknesses were measured at 10 different points for each of three samples under a load of 175 kPa (measured using a micrometer in accordance with JIS-B-7502) and an average value of a total of the 30 points was calculated.

*Tensile strength ofnon woven*

Measurement was performed using a constant speed stretching tensile tester in accordance with JIS-L-1096. A sample piece of 5 cm (width) $\times$ 15 cm (length) was stretched in a longitudinal direction of the nonwoven at a tensile speed of 30 cm/min, where a length between clamps of the sample piece was 10 cm. A value of a load when the sample piece was broken was regarded as a tensile strength.

*Specific surface area of nonwoven*

Measurement was performed using a specific surface area meter (Tristar 3000, manufactured by Shimadzu Corporation). A nonwoven was cut into a square of 3 cm $\times$ 8 cm. The nonwoven was placed in a measurement cell. The nonwoven was subjected to a degassing process at a temperature of 60°C for two hours. A specific surface area of the nonwoven was measured using a multi-point BET using nitrogen gas.

*Split rate*

Nonwovens were bundled in a manner such that the bundle has a cross-section in a longitudinal direction of the nonwoven. The bundle of the nonwovens was passed through a metal plate having a 1-mm diameter hole. The resultant nonwoven was magnified by a factor of 400 using an electron microscope. The proportion of split ultra-fine fibers was calculated.

Fiber materials used in the examples and comparative examples were prepared as follows.

*Fiber 1*

An 8-splittable composite short fiber (trade name: DF-3, manufactured by Daiwabo Co., Ltd.) was used, in which the first component is a methylpentene copolymer having a melting point of 240°C, the second component is polypropylene having a melting point of 163°C, the composite ratio is 50:50, the fiber cross-section is shown in FIG. 1A, the fineness is 2.2 dtex, and the fiber length is 6 mm.

*Fiber 2*

An 8-splittable composite short fiber was prepared, in which the first component is a high-density polyethylene having a melting point of 132°C (manufactured by Japan Polychem Corporation), the second component is a polypropylene having a melting point of 163°C (manufactured by Japan Polychem Corporation), the composite ratio is 50:50, the hollow shape ratio is 17.5%, the fiber cross-section is shown in FIG. 1D, the fineness is 1.7 dtex, and the fiber length is 6 mm.

*Fiber 3*

A 16-splittable composite short fiber was used, in which the same resin combination as that of the fiber 1 is used, the fiber cross-section is shown in FIG. 1E, the fineness is 2.2 dtex, and the fiber length is 6 mm.

*Fiber 4*

A 16-splittable composite short fiber was used, in which the same resin combination as that of the fiber 1 is used, the hollow shape ratio is 7.3%, the fiber cross-section is shown in FIG. 1F, the fineness is 2.2 dtex, and the fiber length is 6 mm.

*Fiber 5*

A concentric sheath-core type composite fiber (trade name: NBF(H), manufactured by Daiwabo Co., Ltd.) was used, in which the sheath component is high-density polyethylene having a melting point of 132°C, the core component is polypropylene having a melting point of 163°C, the composite ratio is 50:50, the fineness is 1.7 dtex, and the fiber length is 10 mm.

*Fiber 6*

A concentric sheath-core type composite fiber was prepared, in which the sheath component is metallocene catalyzed polyethylene (manufactured by Ube Industries, Ltd.) having a melting point of 118°C, the core component is polypropylene (manufactured by Japan Polychem Corporation) having a melting point of 163°C, the composite ratio is 50:50, the fineness is 1.1 dtex, and the fiber length is 10 mm.

*Fiber 7*

A polypropylene fiber was used, which is made of polypropylene (trade name: PNHC, manufactured by Daiwabo Co., Ltd.) having a melting point of 163°C, and has a fineness of 1.3 dtex, a fiber length of 10 mm, and a fiber strength of 7.1 cN/dtex.

*Fiber 8*

A polypropylene fiber (trade name: PZ, manufactured by Daiwabo Co., Ltd.) was used, which is made of polypropylene having a melting point of 163°C, and has a fineness of 0.8 dtex, a fiber length of 10 mm, and a fiber strength of 5.7 cN/dtex.

*Example 1*

The fiber 1 (40 mass%), the fiber 5 (40 mass%), and the fiber 7 (20 mass%) were mixed to prepare a water-dispersed slurry having a concentration of 0.5 mass%. The fiber 1 was subjected to a splitting process using a pulper where the stirring time was 60 min and the rotational speed was 1000 rpm. From the resultant water-dispersed slurry, a wetlaid web having a mass per unit area of 35 g/m$^2$ was produced using each of a cylinder type wet papermaking machine and a short wire type wet papermaking machine. The wetlaid webs were combined together. Thereafter, the resultant web was subjected to a heat treatment using a cylinder dryer machine at a temperature of 135°C under a line pressure of 40 N/cm. As a result, the fiber 1, the fiber 5 and the fiber 7 were flattened mainly in a surface layer portion of the nonwoven, while the sheath component of the fiber 5 was melted to bond the component fibers together, to obtain a wetlaid web. In the resultant wetlaid web, about 60% of the fiber 1 was split to form ultra-fine short fibers.

Thereafter, a nozzle with orifices having a pore diameter of 0.1 mm that are arranged at intervals of 0.6 mm was used to apply a column-shaped water jet having a water pressure of 3 MPa, 4 MPa or 8 MPa to front and rear sides of the wetlaid web. Thereby, the unsplit fiber 1 was split, and at the same time, fibers were loosened and rearranged mainly in the nonwoven surface layer portion. Thereafter, the wetlaid web was dried at 120°C using a hot-air dryer. Thus, the hydroentangling-processed wetlaid nonwoven was obtained. In the wetlaid nonwoven, about 95% of the fiber 1 was split to form ultra-fine short fibers.

Thereafter, the wetlaid nonwoven was subjected to a sulfonation treatment using an SO$_3$ gas treatment machine under an SO$_3$ gas atmosphere having a concentration of 8 vol% at a reaction temperature of 60°C for a reaction time of 60 seconds. Next, the nonwoven was neutralized with 5% sodium hydroxide solution and was washed with hot water of 60°C, followed by drying at 70°C using a drum dryer. The resultant nonwoven was wound up using a winder. Thus, a sulfonated nonwoven was obtained.

Thereafter, the sulfonated nonwoven was subjected to a calendering process using a calendering roller at a roller temperature of 60°C with a line pressure of 650 N/cm so that fibers were flattened mainly in the nonwoven surface layer portion while the thickness was regulated. As a result, a separator material of the present invention was obtained. In the thus-obtained separator material, the proportion of flattened fibers that were bonded by the polyolefin thermal bonding short fiber and constituted the nonwoven surface layer portion, was larger than that of an inner portion of the nonwoven.

*Example 2*

A separator material of the present invention was obtained in a manner similar to that of Example 1, except that: the wetlaid nonwoven that was obtained by subjecting the wetlaid web to the hydroentangling process in Example 1, was subjected to a sulfonation treatment using an SO$_3$ gas treatment machine under an SO$_3$ gas atmosphere having a concentration of 8 vol% at a reaction temperature of 60°C for a reaction time of 90 seconds; next, the nonwoven was neutralized with 5% sodium hydroxide solution and was washed with hot water of 60°C, followed by drying at 70°C using a drum dryer; the resultant nonwoven was wound up using a winder; and thus, a sulfonated nonwoven was obtained. In the resultant separator material, the proportion of flattened fibers that were bonded by the polyolefin thermal bonding short fiber and constituted the nonwoven surface layer portion, was larger than that of an inner portion of the nonwoven.

*Example 3*

A separator material of the present invention was obtained in a manner similar to that of Example 1, except that the fiber 2 (40 mass%), the fiber 6 (40 mass%), and the fiber 7 (20 mass%) were mixed instead of the component fibers of Example 1. In the resultant wetlaid web, the split rate of the fiber 2 was about 70%. In a wetlaid nonwoven obtained by subjecting the wetlaid web to a hydroentangling process, the split rate of the fiber 2 was about 95%. In the resultant separator material, the proportion of flattened fibers that were bonded by the polyolefin thermal bonding short fiber and constituted the nonwoven surface layer portion was larger than that of an inner portion of the nonwoven.

*Example 4*

A separator material of the present invention was obtained in a manner similar to that of Example 1, except that: the fiber 3 (40 mass%), the fiber 5 (40 mass%), and the fiber 7 (20 mass%) were mixed instead of the component, fibers of Example 1; and a wetlaid web having a mass per unit area of 30 g/m$^2$ was produced using each of a cylinder type wet papermaking machine and a short wire type wet papermaking machine and the wetlaid webs were combined. In the resultant wetlaid web, the split rate of the fiber 3 was about 40%. In a wetlaid nonwoven obtained by subjecting the wetlaid web to a hydroentangling process, the split rate of the fiber 3 was about 90%. In the resultant separator material, the proportion of flattened fibers that were bonded by the polyolefin thermal bonding short fiber and constituted the nonwoven surface layer portion was larger than that of an inner portion of the nonwoven.

*Example 5*

The fiber 3 (40 mass%), the fiber 5 (40 mass%), and the fiber 7 (20 mass%) were mixed instead of the components fibers of Example 1. A wetlaid web having a mass per unit area of 30 g/m$^2$ was produced using each of a cylinder type wet papermaking machine and a short wire type wet papermaking machine, and the wetlaid webs were combined together. Thereafter, the resultant web was subjected to a heat treatment using a cylinder dryer machine at a temperature of 135°C under a line pressure of 40 N/cm. As a result, the fiber 3, the fiber 5 and the fiber 7 were flattened mainly in a surface layer portion of the nonwoven, while the sheath component of the fiber 5 was melted to bond the component fibers together, to obtain a wetlaid web. In the resultant wetlaid web, about 40% of the fiber 3 was split to form ultra-fine short fibers.

Thereafter, a nozzle with orifices having a pore diameter of 0.1 mm that are arranged at intervals of 0.6 mm was used to apply a column-shaped water jet having a water pressure of 5 MPa, 8 MPa or 10 MPa to front and rear sides of the wetlaid web. Thereby, the unsplit fiber 3 was split, and at the same time, fibers were loosened and rearranged mainly in the nonwoven surface layer portion. Thereafter, the wetlaid web was dried at 120°C using a hot-air dryer. Thus, the hydroentangling-processed wetlaid nonwoven was obtained. In the wetlaid nonwoven, about 95% of the fiber 3 was split to form ultra-fine short fibers.

The hydroentangling process and thereafter that are similar to those of Example 1 were performed. As a result, a separator material of the present invention was obtained. In the resultant separator material, the proportion of flattened fibers that were bonded by the polyolefin thermal bonding short fiber and constituted the nonwoven surface layer portion was larger than that of an inner portion of the nonwoven.

*Example 6*

A separator material of the present invention was obtained in a manner similar to that of Example 4, except that the fiber 4 (40 mass%), the fiber 5 (40 mass%), and the fiber 7 (20 mass%) were mixed instead of the component fibers of Example 4. In the resultant wetlaid web, the split rate of the fiber 4 was about 60%. In a wetlaid nonwoven obtained by subjecting the wetlaid web to a hydroentangling process, the split rate of the fiber 4 was about 95%. In the resultant separator material, the proportion of flattened fibers that were bonded by the polyolefin thermal bonding short fiber and constituted the nonwoven surface layer portion was larger than that of an inner portion of the nonwoven.

*Comparative Example 1*

A wetlaid web was produced with a method similar to that of Example 1, where the fiber 1 (20 mass%), the fiber 5 (40 mass%), and the fiber 8 (40 mass%) were mixed as component fibers. Thereafter, the wetlaid web was subjected to a sulfonation treatment using an SO$_3$ gas treatment machine under SO$_3$ gas atmosphere having a concentration of 8 vol% at a reaction temperature of 35°C for a reaction time of 60 seconds without subjecting the wetlaid web to a hydroentangling process. The subsequent conditions were similar to those of Example 1. As a result, a comparative separator material was obtained. In the resultant wetlaid web, the fiber 1 had a split rate of about 60%.

*Comparative Example 2*

The fiber 1 (40 mass%), the fiber 5 (40 mass%), and the fiber 7 (20 mass%) were mixed to prepare a water-dispersed slurry having a concentration of 0.5 mass%. The fiber 1 was subjected to a splitting process using a pulper where the stirring time was 30 min and the rotational speed was 1000 rpm. From the resultant water-dispersed slurry, a wetlaid web having a mass per unit area of 35 g/m$^2$ was produced using each of a cylinder type wet papermaking machine and a short wire type wet papermaking machine. The wetlaid webs were combined together. Thereafter, the resultant web was subjected to a heat treatment using a cylinder dryer machine at a temperature of 135°C under a line pressure of 40 N/cm. In the resultant wetlaid web, about 30% of the fiber 1 was split to form ultra-fine short fibers.

Thereafter, a nozzle with orifices having a pore diameter of 0.1 mm that are arranged at intervals of 0.6 mm was used to apply a column-shaped water jet having a water pressure of 3 MPa, 4 MPa or 8 MPa to front and rear sides of the wetlaid web. Thereby, the unsplit fiber 1 was split, and at the same time, fibers were loosened and rearranged mainly in the nonwoven surface layer portion. Thereafter, the wetlaid web was dried at 135°C using a hot-air dryer, while the sheath component of the fiber 5 was melted to thermally bond the component fibers together securely. Thus, the hydroentangling-processed wetlaid nonwoven was obtained. In the wetlaid nonwoven, about 65% of the fiber 1 was split to form ultra-fine short fibers.

Thereafter, the hydroentangling-processed wetlaid nonwoven was subjected to a sulfonation treatment and a calender process in a manner similar to Example 1. Thus, a comparative separator material was obtained.

The above-described examples and comparative examples are collectively shown in Tables 1 and 2.

Table 1

| | | | examples | | | | | |
|---|---|---|---|---|---|---|---|---|
| | | | 1 | 2 | 3 | 4 | 5 | 6 |
| fiber content (mass%) | splittable composite short fiber | fiber 1 | 40 | 40 | 0 | 0 | 0 | 0 |
| | | fiber 2 | 0 | 0 | 40 | 0 | 0 | 0 |
| | | fiber 3 | 0 | 0 | 0 | 40 | 40 | 0 |
| | | fiber 4 | 0 | 0 | 0 | 0 | 0 | 40 |
| | thermal bonding short fiber | fiber 5 | 40 | 40 | 0 | 40 | 40 | 40 |
| | | fiber 6 | 0 | 0 | 40 | 0 | 0 | 0 |
| | high-streng th fiber | fiber 7 | 20 | 20 | 20 | 20 | 20 | 20 |
| | | fiber 8 | 0 | 0 | 0 | 0 | 0 | 0 |
| split rate (%) | | | 95 | 95 | 95 | 90 | 95 | 95 |
| apparent specific surface area of nonwoven ($m^2$/g) | | | 0.529 | 0.529 | 0.554 | 0.750 | 0.777 | 0.688 |
| specific surface area of nonwoven ($m^2$/g) | | | 0.85 | 0.87 | 0.71 | 1.09 | 0.94 | 0.97 |
| specific surface area increase rate (%) | | | 161 | 164 | 128 | 145 | 121 | 141 |
| mass per unit area (g/$m^2$) | | | 69 | 74 | 71 | 60 | 60 | 62 |
| thickness ($\mu$m) | | | 181 | 178 | 187 | 198 | 193 | 191 |
| longitudinal direction tensile strength of nonwoven (N/5cm) | | | 136 | 147 | 210 | 112 | 122 | 137 |
| ESCA | | C (atom%) | 95.24 | 80.59 | 92.12 | 94.03 | 92.91 | 92.41 |
| | | O (atom%) | 3.47 | 13.31 | 5.71 | 4.31 | 5.02 | 5.21 |
| | | S (atom%) | 0.91 | 4.24 | 1.53 | 1.16 | 1.44 | 1.52 |
| | | Na (atom%) | 0.37 | 1.86 | 0.65 | 0.49 | 0.63 | 0.86 |
| | | $(S/C)_E \times 10^{-3}$ | 9.55 | 52.6 | 16.6 | 12.34 | 15.5 | 16.44 |
| flask combustion | | $(S/C)_B \times 10^{-3}$ | 4.17 | 5.91 | 3.91 | 3.50 | 3.36 | 3.49 |
| depth of sulfonation | | | 2.29 | 8.90 | 4.25 | 3.53 | 4.61 | 4.71 |
| puncture strength (N) | | | 11.1 | 11.5 | 18.5 | 8.2 | 7.8 | 8.8 |
| heat-resistant alkali mass reduction rate (mass %) | | | 1.7 | 2.5 | 1.7 | 1.0 | 0.75 | 0.54 |

Table 2

| | | | comparative examples | |
|---|---|---|---|---|
| | | | 1 | 2 |
| fiber content (mass%) | splittable composite short fiber | fiber 1 | 20 | 40 |
| | | fiber 2 | 0 | 0 |
| | | fiber 3 | 0 | 0 |
| | | fiber 4 | 0 | 0 |
| | thermal bonding short fiber | fiber 5 | 40 | 40 |
| | | fiber 6 | 0 | 0 |
| | high-strength fiber | fiber 7 | 0 | 20 |
| | | fiber 8 | 40 | 0 |
| split rate (%) | | | 60 | 65 |
| apparent specific surface area of nonwoven ($m^2$/g) | | | 0.408 | 0.45 |
| specific surface area of nonwoven ($m^2$/g) | | | 0.45 | 0.56 |
| specific surface area increase rate (%) | | | 110 | 124 |
| mass per unit area (g/$m^2$) | | | 68 | 70 |
| thickness ($\mu$m) | | | 190 | 183 |
| longitudinal direction tensile strength of nonwoven (N/5cm) | | | 159 | 172 |
| ESCA | | C (atom%) | 89.9 | 90.2 |
| | | O (atom%) | 7.22 | 5:29 |
| | | S (atom%) | 2.81 | 4.28 |
| | | Na (atom%) | 0.17 | 0.23 |
| | | $(S/C)_E \times 10^{-3}$ | 31.29 | 47.45 |
| flask combustion | | $(S/C)_B \times 10^{-3}$ | 2.52 | 3.34 |
| depth of sulfonation | | | 12.4 | 14.21 |
| puncture strength (N) | | | 12.2 | 13.4 |
| heat-resistant alkali mass reduction rate (mass %) | | | 5.5 | 4.9 |

In the separator materials of Examples 1 to 6, the fibers 1 to 4 (splittable composite short fibers) were split into polyolefin ultra-fine short fibers, and the fiber 5 or 6 (polyolefin thermal bonding short fiber) and the fiber 7 (polyolefin high-strength short fiber) were flattened, so that the specific surface area of the nonwoven was in a range of 0.5 to 1.5 $m^2$/g. Therefore, the value of the depth of sulfonation could be made small in spite of a high sulfonation level. As a result, substantially no uneven distribution of the sulfonation level occurred between a near-surface portion and an inner portion of the separator, and the heat-resistant alkali mass reduction rate was as small as 3 mass% or less in each example, which contributed to the self-discharging performance of a battery.

Further, the separator materials of Examples 1 to 6 had a desired sulfonation level and depth of sulfonation, and a high tensile strength of the nonwoven, and also contributed to process performance when assembling a battery, and short-circuit withstand capability.

On the other hand, the separator material of Comparative Example 1 had a specific surface area of as small as 0.45 $m^2$/g, and a depth of sulfonation that exceeds 12. As a result, the heat-resistant alkali mass reduction rate was as high as 5.5 mass%, and did not contribute to the self-discharging performance of a battery. The separator material of Comparative Example 2 also had a specific surface area of as small as 0.56 $m^2$/g, and a depth of sulfonation that exceeds 12. As a result, the heat-resistant alkali mass reduction rate was as high as 4.9 mass%, which did not contribute to the self-discharging performance of a battery.

As described above, it could be confirmed that: the separator material of the present invention is a sulfonated, thermal bonding nonwoven that comprises a polyolefin short fiber having a fineness of less than 0.5 dtex and a polyolefin thermal bonding short fiber. At least a portion of the polyolefin thermal bonding short fiber is flattened, so that the component fibers are bonded together; the separator material has a desired specific surface area of the nonwoven, distribution of a sulfur atom amount in a surface layer portion and an inner portion of the nonwoven, and depth of sulfonation; and the separator material provides a battery that has a high level of self-discharging performance when charge and discharge are repeatedly performed, a high level of process performance when assembling a battery, and a high level of short-circuit withstand capability.

Furthermore, the separator material of the present invention may be a nonwoven in which a polyolefin high-strength short fiber is included as the other polyolefin short fiber, and at least a portion of polyolefin high-strength short fiber is flattened. In this case, the fabric tensile strength of the nonwoven can be further improved.

Industrial Applicability

The separator material of the present invention is useful for an alkali secondary battery, a lithium ion secondary battery, an electrochemical device (e.g., an electrical bilayer capacitor, a capacitor, etc.), an ion exchange separator (e.g., an ion catcher, etc.), and the like. Particularly, because of a high level of self-discharging performance, the separator material is preferable for alkali secondary batteries, such as a nickel-cadmium battery, a nickel-zinc battery, a nickel-hydrogen battery, and the like.

The alkali secondary battery separator of the present invention provides an improved level of self-discharging performance of a battery, and therefore, is useful for a general-consumer battery or the like, particularly preferably for a pure electric vehicle (PEV) or a hybrid electric vehicle (HEV).

**Claims**

1. A method of producing an alkali secondary battery separator comprising:

   subjecting fibers comprising a polyolefin ultra-fine short fiber having a fineness of less than 0.5 dtex and a fiber length in a range of 3 mm to 25 mm and other polyolefin short fibers haying a fiber length in a range of 3 mm to 25 mm to a wetlaying process, the other polyolefin short fibers including a polyolefin thermal bonding short fiber;
   subjecting the fibers to a heat treatment at a temperature at which the polyolefin thermal bonding short fiber melts, so as to flatten at least a portion of the polyolefin thermal bonding short fiber and to thermally bond the component fibers together;
   thereafter, subjecting the component fibers to a hydroentangling process to entangle together;
   thereafter, imparting functional groups containing sulfur atoms to the fibers by a sulfonation treatment; and
   thereafter, subjecting the fibers to a heat press process, thereby obtaining a nonwoven having a specific surface area in a range of 0.6 m$^2$/g to 1.5 m$^2$/g **characterized in that** the heat press process is a calender roller process in which a pair of calender rollers having a temperature that is higher than 40°C and is lower by 30°C or more than a temperature at which the component fibers melt, are used to press the nonwoven with a line pressure in a range of 150 N/cm to 1500 N/cm.

2. The method of producing an alkali secondary battery separator according to claim 1, wherein, in a step before the wetlaying process, a splittable composite fiber having a fiber length in a range of 3 mm to 25 mm and another polyolefin short fiber comprising a polyolefin thermal bonding short fiber are prepared, and at least a portion of the splittable composite fiber is preliminarily split to obtain the polyolefin ultra-fine short fiber having a fineness of less than 0.5 dtex.

3. The method of producing an alkali secondary battery separator according to claim 1, wherein, after performing the hydroentangling process, a heat treatment is performed at a temperature that is lower than a melting point of the polyolefin thermal bonding short fiber, and thereafter, a sulfonation treatment is performed.

4. The method of producing an alkali secondary battery separator according to claim 1, wherein the separator material is a wetlaid web in which the other polyolefin short fibers include a polyolefm high-strength short fiber and having a fiber length in a range of 3 mm to 25 mm having a fiber strength of 5 cN/dtex or more in addition to the polyolefin thermal bonding short fiber, and at least a portion of the polyolefin high-strength short fiber is flattened.

5. The method of producing an alkali secondary battery separator according to claim 1, wherein the sulfonation treatment is an SO$_3$ gas treatment at a temperature in a range of 40°C to 90°C.

6. The method of producing an alkali secondary battery separator according to claim 1, wherein the hydroentangling process is to apply a water jet with a water pressure in a range of 2 MPa to 10 MPa.

7. The method of producing an alkali secondary battery separator according to claim 1, wherein a ratio of a specific surface area of the nonwoven to an apparent specific surface area of the nonwoven calculated from a specific surface area of the fiber constituting the nonwoven (specific surface area increase rate), is regulated to be in a range of 115% to 200%.

**Patentansprüche**

1. Verfahren zum Herstellen eines Separators für eine Alkali-Sekundärbatterie, umfassend:

   Unterziehen von Fasern, die eine ultrafeine Polyolefin-Kurzfaser mit einer Feinheit von weniger als 0,5 dtex und einer Faserlänge in einem Bereich von 3 mm bis 25 mm und andere Polyolefin-Kurzfasern mit einer Faserlänge in einem Bereich von 3 mm bis 25 mm aufweisen, wobei die anderen Polyolefin-Kurzfasern eine wärmegeklebte Polyolefin-Kurzfaser aufweisen, einem Nasslegungsprozess;
   Unterziehen der Fasern einer Wärmebehandlung bei einer Temperatur, bei der die wärmegeklebte Polyolefin-Kurzfaser schmilzt, um so wenigstens einen Teil der wärmegeklebten Polyolefin-Kurzfaser zu glätten und die Faserbestandteile durch Wärme miteinander zu verkleben;
   anschließend Unterziehen der Faserbestandteile einem Wasservernadelungsprozess, um diese miteinander zu verschlingen;
   anschließend Übertragen von Schwefelatome enthaltenden funktionellen Gruppe auf die Fasern mittels einer Sulfonierungsbehandlung; und
   anschließend Unterziehen der Fasern einem Wärme-Druck-Prozess, wodurch ein Faservlies mit einer spezifischen Oberfläche in einem Bereich von 0,6 m$^2$/g bis 1,5 m$^2$/g erhalten wird, **dadurch gekennzeichnet, dass** der Wärme-Druck-Prozess ein Kalanderwalzen-Prozess ist, bei dem ein Paar Kalanderwalzen mit einer Temperatur, die größer als 40 °C und um 30 °C oder mehr kleiner als eine Temperatur, bei der die Faserbestandteile schmelzen, ist, zum Pressen des Faservlieses mit einem Leitungsdruck in einem Bereich von 150 N/cm bis 1500 N/cm verwendet werden.

2. Verfahren zum Herstellen eines Separators für eine Alkali-Sekundärbatterie nach Anspruch 1, wobei in einem Schritt vor dem Nasslegungsprozess eine teilbare Kompositfaser mit einer Faserlänge in einem Bereich von 3 mm bis 25 mm und eine andere Polyolefin-Kurzfaser, die eine wärmegeklebte Polyolefin-Kurzfaser aufweist, vorbereitet werden und vorausgehend wenigstens ein Teil der teilbaren Kompositfaser geteilt wird, um die ultrafeine Polyolefin-Kurzfaser mit einer Feinheit von weniger als 0,5 dtex zu erhalten.

3. Verfahren zum Herstellen eines Separators für eine Alkali-Sekundärbatterie nach Anspruch 1, wobei nach dem Durchführen des Wasservernadelungsprozesses eine Wärmebehandlung bei einer Temperatur, die kleiner als ein Schmelzpunkt der wärmegeklebten Polyolefin-Kurzfaser ist, durchgeführt wird und anschließend eine Sulfonierungsbehandlung durchgeführt wird.

4. Verfahren zum Herstellen eines Separators für eine Alkali-Sekundärbatterie nach Anspruch 1, wobei das Separator-Material ein nassgelegtes Flor ist, in dem die anderen Polyolefin-Kurzfasern neben der wärmegeklebten Polyolefin-Kurzfaser eine hochfeste Polyolefin-Kurzfaser mit einer Faserlänge in einem Bereich von 3 mm bis 25 mm und einer Faserstärke von 5 cN/dtex oder mehr aufweisen, und wenigstens ein Teil der hochfesten Polyolefin-Kurzfaser geglättet wird.

5. Verfahren zum Herstellen eines Separators für eine Alkali-Sekundärbatterie nach Anspruch 1, wobei die Sulfonierungsbehandlung eine Behandlung mit SO$_3$-Gas bei einer Temperatur in einem Bereich von 40 °C bis 90 °C ist.

6. Verfahren zum Herstellen eines Separators für eine Alkali-Sekundärbatterie nach Anspruch 1, wobei der Wasservernadelungsprozess dazu dient, einen Wasserstrahl mit einem Wasserdruck in einem Bereich von 2 MPa bis 10 MPa aufzubringen.

7. Verfahren zum Herstellen eines Separators für eine Alkali-Sekundärbatterie nach Anspruch 1, wobei ein Verhältnis einer spezifischen Oberfläche des Faservlieses zu einer offensichtlichen spezifischen Oberfläche des Faservlieses, die aus einer spezifischen Oberfläche der Fasern, die das Faservlies bilden, berechnet wurde (Verhältnis der Zunahme der spezifischen Oberfläche), auf einen Bereich von 115 % bis 200 % eingestellt wird.

**Revendications**

1. Procédé de production d'un séparateur pour pile alcaline rechargeable comprenant :

   la soumission de fibres comprenant une fibre courte ultra-fine de polyoléfine ayant une finesse de moins de 0,5 dtex et une longueur de fibre dans une plage de 3 mm à 25 mm et d'autres fibres courtes de polyoléfine ayant une longueur de fibre dans une plage de 3 mm à 25 mm à un processus de fabrication par voie humide, les autres fibres courtes de polyoléfine incluant une fibre courte de polyoléfine à liaison thermique ;
   la soumission des fibres à un traitement thermique à une température à laquelle la fibre courte de polyoléfine à liaison thermique fond, de façon à aplanir au moins une partie de la fibre courte de polyoléfine à liaison thermique et à lier de façon thermique les fibres composantes ensemble ;
   après cela, la soumission des fibres composantes à un processus d'hydroenchevêtrement pour les enchevêtrer ensemble ;
   après cela, l'application de groupes fonctionnels contenant des atomes de soufre aux fibres par un traitement de sulfonation ; et
   après cela, la soumission des fibres à un processus de pressage à chaud, obtenant de ce fait un non-tissé ayant une superficie spécifique dans une plage de 0,6 m$^2$/g à 1,5 m$^2$/g **caractérisé en ce que** le processus de pressage à chaud est un processus de calandrage dans lequel un couple de cylindres de calandrage ayant une température qui est supérieure à 40 °C et qui est inférieure de 30 °C ou plus à une température à laquelle les fibres composantes fondent, est utilisé pour presser le non-tissé avec une pression linéaire dans une plage de 150 N/cm à 1 500 N/cm.

2. Procédé de production d'un séparateur pour pile alcaline rechargeable selon la revendication 1, dans lequel, dans une étape avant le processus de fabrication par voie humide, une fibre composite pouvant être divisée ayant une longueur de fibre dans une plage de 3 mm à 25 mm et une autre fibre courte de polyoléfine comprenant une fibre courte de polyoléfine à liaison thermique sont préparées, et au moins une partie de la fibre composite pouvant être divisée est préalablement divisée pour obtenir la fibre courte ultra-fine de polyoléfine ayant une finesse de moins de 0,5 dtex.

3. Procédé de production d'un séparateur pour pile alcaline rechargeable selon la revendication 1, dans lequel, après l'exécution du processus d'hydroenchevêtrement, un traitement thermique est effectué à une température qui est inférieure à un point de fusion de la fibre courte de polyoléfine à liaison thermique, et après cela, un traitement de sulfonation est effectué.

4. Procédé de production d'un séparateur pour pile alcaline rechargeable selon la revendication 1, dans lequel la matière de séparateur est un voile fabriqué par voie humide dans lequel les autres fibres courtes de polyoléfine incluent une fibre courte de polyoléfine à haute résistance et ayant une longueur de fibre dans une plage de 3 mm à 25 mm ayant une résistance de fibre de 5 cN/dtex ou supérieure en plus de la fibre courte de polyoléfine à liaison thermique, et au moins une partie de la fibre courte de polyoléfine à haute résistance est aplanie.

5. Procédé de production d'un séparateur pour pile alcaline rechargeable selon la revendication 1, dans lequel le traitement de sulfonation est un traitement au gaz SO$_3$ à une température dans une plage de 40 °C à 90 °C.

6. Procédé de production d'un séparateur pour pile alcaline rechargeable selon la revendication 1, dans lequel le processus d'hydroenchevêtrement est d'appliquer un jet d'eau avec une pression d'eau dans une plage de 2 MPa à 10 MPa.

7. Procédé de production d'un séparateur pour pile alcaline rechargeable selon la revendication 1, dans lequel un rapport d'une superficie spécifique du non-tissé sur une superficie spécifique apparente du non-tissé calculé à partir d'une superficie spécifique de la fibre constituant le non-tissé (taux d'augmentation de superficie spécifique), est régulé pour être dans une plage de 115 % à 200 %.

FIG. 1A

FIG. 1B

FIG. 1C

FIG. 1D

FIG. 1E

FIG. 1F

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11144698 A
- JP H11317213 A
- JP H11297294 A
- JP 2001313066 A
- JP 2000215876 A
- EP 0989619 A1